(19) **Europäisches Patentamt / European Patent Office / Office européen des brevets**

(11) **EP 1 636 145 B1**

(12) **FASCICULE DE BREVET EUROPEEN**

(45) Date de publication et mention de la délivrance du brevet: **25.11.2009 Bulletin 2009/48**

(51) Int Cl.: **C03C 17/00** (2006.01)

(21) Numéro de dépôt: **04742886.7**

(22) Date de dépôt: **10.06.2004**

(86) Numéro de dépôt international: **PCT/FR2004/050222**

(87) Numéro de publication internationale: **WO 2004/113246 (29.12.2004 Gazette 2004/53)**

(54) **TRAITEMENT PAR PROJECTION DE PANNEAUX POSES SUR UN SUPPORT BARRIERE**

BEHANDLUNG DURCH PROJEKTION VON PLATTEN, DIE AUF EINER UNTERSTÜTZUNG LIEGEN

SPRAY TREATMENT OF PANELS DISPOSED ON A BARRIER SUPPORT

(84) Etats contractants désignés:
AT BE BG CH CY CZ DE DK EE ES FI FR GB GR HU IE IT LI LU MC NL PL PT RO SE SI SK TR

(30) Priorité: **13.06.2003 FR 0307111**

(43) Date de publication de la demande:
**22.03.2006 Bulletin 2006/12**

(73) Titulaire: **SAINT-GOBAIN GLASS FRANCE**
**92400 Courbevoie (FR)**

(72) Inventeurs:
• **NAVARRO, Christian**
**F-60880 JAUX (FR)**
• **BRASY, Sébastien**
**F-60150 MONTMACQ (FR)**
• **BARTONICEK, Jaroslav**
**F-59500 DOUAI (FR)**

(74) Mandataire: **Colombier, Christian**
**Saint-Gobain Recherche**
**39, quai Lucien Lefranc**
**93300 Aubervilliers (FR)**

(56) Documents cités:
EP-A- 0 901 991    US-A- 4 338 078
US-A- 4 358 472    US-A- 5 250 321

## Description

L'invention concerne un procédé de traitement de la surface de panneaux par la projection d'une matière liquide, solide pulvérulente, ou gazeuse réduisant fortement les effets de bords. L'invention est plus particulièrement applicable aux dépôts de couches minces tels que les dépôts à chaud ou à froid (notamment assistés par plasma), notamment les dépôts pyrolytiques dans lesquels au moins un précurseur de la couche est projeté, ce précurseur étant gazeux, liquide ou solide pulvérulent. L'invention concerne en premier lieu les dépôts chimiques à partir d'une phase vapeur (CVD de l'anglais Chemical Vapor Deposition) et est particulièrement adaptée au dépôt CVD de $SnO_2$, notamment dopé au fluor (Sn02 :F).

L'invention apporte une solution au problème des effets de bord pouvant être rencontrés lorsque l'on effectue un traitement de la surface d'un panneau par projection d'une matière gazeuse, liquide ou solide pulvérulente. En effet, on s'aperçoit que le traitement n'est pas forcément régulier au niveau des bordures et procure au panneau des propriétés sensiblement différente près des bord du panneau par rapport à l'intérieur de ses surfaces principales. L'invention résout ce problème en prévoyant de poser le panneau sur au moins un support plus grand que le panneau à traiter pour que le traitement par la matière projetée s'opère aux bordures du panneau comme à l'intérieur de ses surfaces principales. Le support prolonge en quelque sorte le panneau ce qui rend les conditions de traitement sensiblement identiques ou au moins plus voisines, aux bords et au centre. Cet effet de l'invention est obtenu grâce au rôle barrière joué par le support vis-à-vis de la matière projetée. Le support joue un rôle barrière au même titre que le panneau lui-même et prolonge celui-ci comme s'il était infini.

On sait réaliser des dépôts CVD sur un ruban continu de verre plat directement après sa fabrication, habituellement par une installation de verre flotté. Le dépôt est réalisé alors que le ruban n'est pas encore découpé et défile sur un lit de rouleaux. Après découpe du ruban dé verre en différents plateaux, on constate généralement que la couche mince obtenue est très homogène en apparence et en épaisseur, y compris à proximité des coins et bordures. Du fait que les bandes longitudinales du ruban sont découpées après le dépôt CVD, une éventuelle inhomogénéité sur les bordures ne pose pas de problème car ces bordures sont de toute façon éliminées à la découpe. Rappelons que la découpe du verre est habituellement réalisée en continu pendant le défilement du verre sur un lit de rouleaux. Le système du défilement sur des rouleaux est un système couramment utilisé dans l'industrie du verre pour le convoyage des feuilles de verre.

Dans ce qui suit, on appelle panneau un objet comprenant deux faces principales parallèles et une tranche de dimension plus faible que celle des longueurs et largeurs des faces principales, les faces principales ayant une longueur et une largeur finies. Un ruban continu de verre sortant d'une installation de verre flotté n'est donc pas un panneau car sa longueur est indéfinie. Une feuille de verre obtenu par découpe d'un ruban continu est un panneau. Le panneau peut avoir une épaisseur allant par exemple de 1 à 10 mm. Le panneau peut avoir une dimension supérieure à 10 cm, voire supérieure à 20 cm dans toutes les directions parallèles à ses faces principales. Ses dimension vont généralement jusqu'à 150 cm dans toutes les directions parallèles à ses faces principales.

Le dépôt CVD sur un ruban continu est une technique connue. Cependant, on peut également souhaiter réaliser des dépôt CVD sur des feuilles (ou panneaux) aux dimensions fixées, comme des feuilles de verre déjà découpées. Ce besoin peut-être ressenti notamment par exemple

- pour le cas ou l'on ne dispose pas de place pour réaliser une installation de dépôt CVD directement sur un ruban continu sortant de fabrication, ou
- pour le cas ou l'on souhaite réaliser un panneau présentant un dépôt CVD sur chacune de ses faces, le dépôt sur l'une des faces étant réalisé en continu, puis le ruban étant découpé en panneaux, puis le dépôt CVD étant réalisé « en reprise » sur l'autre face,
- pour tout autre raison faisant que l'on souhaite réaliser le dépôt « en reprise » sur des panneaux.

Cependant, la demanderesse a découvert qu'en procédant au dépôt CVD sur des panneaux défilant sur des rouleaux, le dépôt réalisé était inhomogène à proximité de leurs bordures. Il semble que le fait que la dimension des panneaux soit finie procure une perturbation de l'écoulement des gaz près des bordures, du fait que les gaz peuvent passer à la fois entre les panneaux et entre les rouleaux. Cette discontinuité de la surface du substrat serait à l'origine d'une différence des conditions de dépôt entre d'une part la majeure partie de la surface du panneau, et d'autre part ses bordures. Cette inhomogénéité se traduit par une inhomogénéité de coloration visible à l'oeil nu et une inhomogénéité d'épaisseur. La demanderesse a découvert que l'on pouvait retrouver des conditions de dépôt correctes aux bordures en posant le panneau à recouvrir sur un support jouant un rôle barrière pour les gaz CVD, notamment un support sensiblement étanche aux gaz. Le support doit avoir des dimensions (largeur et longueur) plus grandes que celles du panneau, forcant les gaz à proximité du panneau à poursuivre leur chemin parallèlement au panneau sur une certaine distance, laquelle est de préférence d'au moins 4 cm. Ce problème expliqué pour les dépôt CVD est généralisable à tous les traitements de panneaux par projection de matière liquide, solide pulvérulente ou gazeuse.

Le document US 4,338,078 décrit un procédé de revêtement par pulvérisation de panneaux de verre reposant sur une bande roulante et prévoit d'ajouter des écrans sur deux des côtés pour éviter les projection sous la bande roulant.

Le document EP 419 053 décrit le dépôt de couches diélectriques sur des plaquettes pour semiconducteurs déposées sur un support plus grand que la plaquette afin d'éviter les turbulences sur les bords du substrat et d'obtenir un revêtement uniforme.

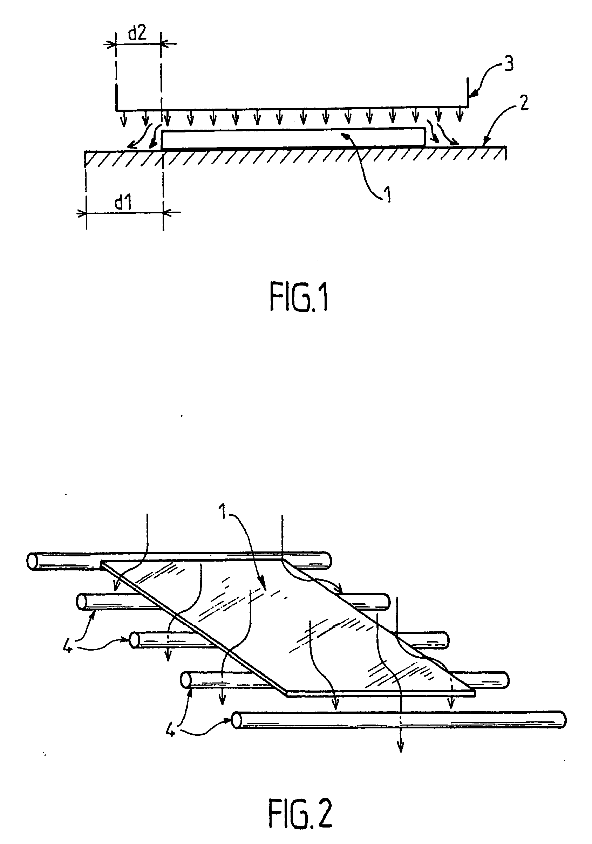

Ainsi l'invention concerne en premier lieu un procédé de traitement de surface d'au moins un panneau posé sur au moins un support, par projection d'une matière gazeuse, liquide ou solide pulvérulente, ledit support débordant du panneau et jouant un rôle barrière vis-à-vis de la matière projetée. De cette façon, le traitement est sensiblement identique sur toute la surface principale recevant le traitement, c'est-à-dire identique en bordure et dans la région plus à l'intérieur de la face principale dudit panneau. Selon l'invention, la matière projetée est forcée à prendre une direction parallèle au panneau à proximité de toutes les bordures dudit panneau, y compris à l'extérieur dudit panneau.(c'est-à-dire notamment la région d1 de la figure 1). Notamment, la matière est projetée sensiblement en direction orthogonale par rapport au panneau, le support forcant la matière projetée à prendre une direction parallèle audit panneau à proximité de ses bordures. En général, la matière est projetée par au moins une buse placée en regard du panneau à traiter. En général, la buse projette la matière à la verticale en direction du panneau en position horizontale. En général, un gaz porteur véhicule la matière à projeter.

Le traitement peut notamment être un procédé de déposition de couche mince par pyrolyse (formation d'une couche pyrolytique) dans une chambre de déposition, comme un procédé de déposition d'une couche mince par réaction chimique à partir d'une phase gazeuse. Ainsi l'invention concerne en premier lieu un procédé de déposition dans une chambre de déposition d'une couche mince par réaction chimique à partir d'une phase gazeuse sur un panneau posé sur un support jouant un rôle barrière pour les gaz, et forçant lesdits gaz à prendre une direction parallèle audit panneau à proximité de ses bordures.

Notamment, le support dépasse horizontalement de tous les côtés du panneau, à savoir ses côtés transversaux et longitudinaux.

La matière projetée peut être un mélange d'au moins deux constituant de nature physique différente : solide pulvérulent, liquide ou gaz. En effet, dans le cas d'un solide pulvérulent ou d'un liquide pulvérisé, on utilise généralement un gaz porteur, le cas échéant inerte, pour convoyer la matière condensée.

Quelque soit la nature de la matière projetée, le support peut être étanche aux gaz. Il peut également être légèrement perméable aux gaz mais être suffisamment étanche pour exercer son rôle barrière (cas d'un tissu aux mailles suffisamment resserrées). Dans son rôle barrière, notamment dans le cas ou la matière projetée est gazeuse, le support exerce de préférence une perte de charge aux gaz telle que son coefficient de perte de charge singulière au gaz soit supérieure à 60. On est dans ce cas là si le support est totalement étanche aux gaz.

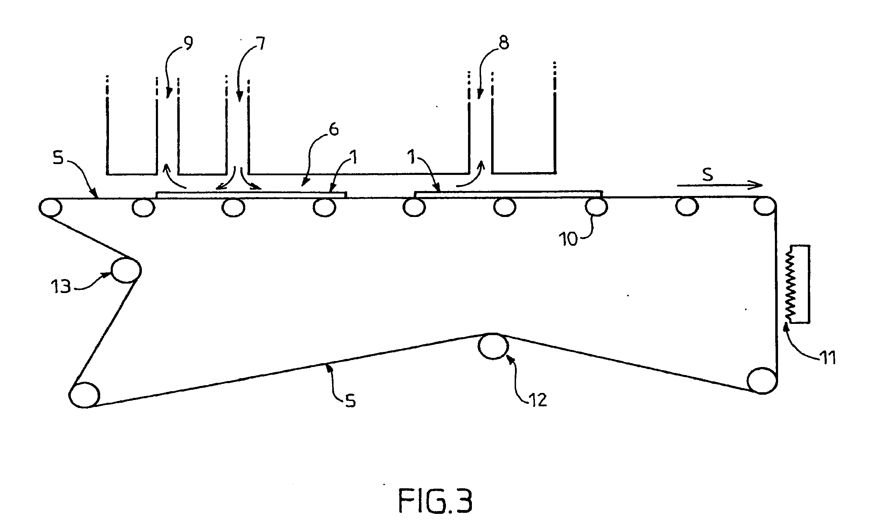

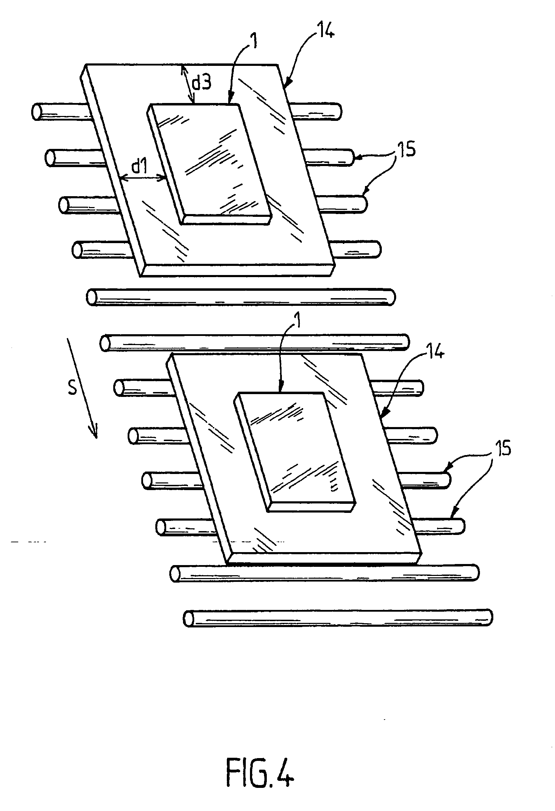

Le support peut par exemple être un plateau totalement étanche aux gaz, par exemple en verre ou en métal réfractaire ou en céramique ou tout autre matière résistant aux conditions du traitement, notamment du dépôt CVD. Ce plateau a des dimensions supérieures à celles du panneau et le panneau est posé sur le plateau de façon à ce que le plateau dépasse suffisamment de tous les côtés du panneau. Le plateau dépasse de chaque bord du panneau (distances d1 et d3 sur la figure 4) d'au moins 4 cm et de préférence d'au moins 5 cm. On peut réaliser un traitement en continu sur une pluralité de panneaux défilant les uns après les autres (par exemple dans une station de dépôt CVD), en posant chaque panneau sur un plateau et en posant les plateaux sur des rouleaux convoyeurs. De préférence, le plateau dépasse des bords transversaux des plateaux (distances d3 de la figure 4) d'une distance au moins égale à 50% et de manière encore préférée au moins égale à 95% de la distance entre la buse d'émission de la matière (notamment des gaz, 7 sur la figure 3) et l'ouvertures d'aspiration principale da ladite matière (8 sur la figure3). Généralement, le plateau dépasse des bords transversaux des plateaux (distances d3 de la figure 4) d'au moins 20 cm et même au moins 50 cm, notamment entre 20 cm et 120 cm. En fait, dans le cas d'une succession de plateaux, si les bords transversaux des plateaux sont suffisamment jointifs ou se recouvrent, la valeur du dépassement de chaque bord transversal des plateaux par rapport aux panneaux qu'ils portent peut être plus faible, l'essentiel étant que la matière (notamment les gaz) rencontre à proximité des bord des panneaux une barrière comme déjà mentionné. Dans ce cas particulier, un panneau joue un rôle barrière vis-à-vis d'un autre plateau voisin. La barrière nécessaire est de préférence présente au delà des bords transversaux des panneaux d'une distance au moins égale à 50% et de manière encore préférée au moins égale à 95% de la distance entre la buse d'émission de la matière et l'ouvertures d'aspiration principale de la matière, et généralement d'une distance d'au moins 20 cm et même d'au moins 50 cm, notamment entre 20 cm et 120 cm. Généralement, le panneau est plan.

Le support peut également être un tapis convoyeur. Comme pour les plateaux, le tapis dépasse suffisamment de chaque côté des panneaux (distance d1 sur la figure 1) d'au moins 4 cm et de préférence d'au moins 5 cm. Le tapis est suffisamment étanche pour jouer son rôle de barrière, notamment vis-à-vis des gaz lorsque la matière projetée est gazeuse. En pratique, il est difficile de réaliser un tapis à la fois souple (car il doit circuler en continu en boucle), totalement étanche aux gaz et résistant aux conditions des dépôts CVD (du fait de la température élevée et de la nature chimique des gaz). On peut réaliser un tel tapis en un tissu de fibres réfractaires, notamment un tissu comprenant un mélange de fibres de verre et de fibres en métal réfractaire inoxydable. Ce tissu possède des mailles suffisamment resserrées pour jouer son rôle barrière aux gaz, si nécessaire. Dans le cas ou la matière projetée est gazeuse, ce tissu présente de préférence un coefficient de perte de charge singulière au gaz supérieure à 60. Comme tissu adapté, on peut citer le tissu 2002 V4A G1 commercialisé par la société ELIT, lequel offre un coefficient de perte de charge singulière d'environ 140. Rappelons que le coefficient de perte de charge singulière $\zeta$ est un nombre sans dimension que l'on peut déterminer en mesurant la perte de charge sur l'air (par exemple à 20°C et à la pression atmosphérique) puis en extrayant $\zeta$ de la formule suivante :

$$\Delta P = \xi\, \rho_{air}\, \frac{v^2}{2}$$

avec $\Delta P$ la perte de charge mesurée, $\rho_{air}$ la masse volumique de l'air et $v$ la vitesse de l'air.

Le tapis peut par exemple défiler avec une vitesse allant de 4 à 30 m/min.

Le tapis convoyeur est particulièrement adapté à un procédé selon l'invention en continu, une multiplicité de panneaux étant posés sur le tapis, ledit tapis formant une boucle de circulation traversant la chambre de traitement, notamment une chambre de déposition.

Dans le cas de dépôts par pyrolyse, de préférence, en dehors de la chambre de déposition et avant son retour à l'entrée de la chambre, le tapis est chauffé pour réduire les quantités de composés émis dans la chambre de déposition et l'imprégnant. Ce chauffage provoque une évaporation et/ou une réaction de ces composés, restes de réactifs de la réaction de pyrolyse. Ainsi cela évite qu'en retournant dans la chambre de déposition, le tapis imprégné ne laisse des marques incontrôlées et indésirable sur la face des panneaux avec laquelle il entre en contact.

Dans la présente demande, le mot transversal (ou transverse) désigne, dans le contexte d'un procédé de traitement (notamment dépôt) en continu, la direction perpendiculaire au sens de défilement des panneaux à revêtir.

Pour une installation de dépôt par pyrolyse en continu, les panneaux à revêtir, posés sur le support, défilent sous un dispositif délivrant la matière projetée, précurseur du dépôt. Ce dispositif comprend au moins une buse en forme de fente transversale (perpendiculaire au sens de défilement des panneaux) délivrant la matière, ladite fente étant au moins aussi grande dans le sens transversal que les panneaux. De préférence, la fente dépasse de chaque côté des panneaux (distance d2 sur la figure 1) d'au moins 4 cm et de préférence d'au moins 5 cm. Le dispositif délivrant la matière peut également comprendre une

ou plusieurs fente d'aspiration de ladite matière, en aval ou en amont, ou à la fois en aval et en amont par rapport au sens de défilement

La présente demande vise particulièrement les dépôts CVD de $SnO_2$ notamment dopé au fluor F. Pour un tel dépôt, on peut notamment utiliser comme gaz CVD un mélange de monobutyltrichlorure d'étain (que l'on appelle MBTCl), d'acide trifluoroacétique (que l'on appelle TFA) et d'eau, ainsi qu'un gaz porteur pouvant être par exemple l'air ou l'azote ou un mélange air/oxygène.

La couche de $SnO_2$ :F déposée contient généralement 0,5 à 2 % atomique (pourcentage du nombre d'atomes de Fluor par rapport au nombre total d'atomes) de F. Ces couches ont généralement une épaisseur allant de 50 à 700 nm et plus généralement de 100 à 600 nm. L'épaisseur des couches ainsi que leur régularité en épaisseur peut notamment être mesurée par la technique de réflectométrie ou éllipsométrie.

Dans la chambre de traitement, voire de déposition, l'écoulement de la matière projetée est généralement laminaire. Il peut également être entre laminaire et turbulent et il n'est pas exclu qu'il soit turbulent. Généralement, la chambre de traitement est sensiblement à la pression atmosphérique. On peut créer une légère dépression à l'intérieur de la chambre pour éviter que des produits toxiques ne s'en échappent.

Avant d'arriver dans la chambre de traitement, le substrat est de préférence lavé pour éliminer les poussières et autres impuretés de sa surface, et de préférence préchauffé pour que sa température soit bien homogène. Dans le cas du système CVD de $SnO_2$ :F, le substrat peut être préchauffé entre 550 et 700°C, et les gaz CVD peuvent être préchauffés en général entre 150 et 250°C, notamment entre 170 et 210°C. La durée du dépôt luimême va généralement de 2 à 15 secondes. Une couche de $SnO_2$ :F ainsi réalisée est polycristalline.

Après un dépôt par pyrolyse, le substrat revêtu subit un refroidissement lent ou rapide et même du type trempe suivant le cas.

Dans le cas d'une couche de $SnO_2$ :F, le substrat revêtu peut être destiné à jouer le rôle d'une face avant d'un écran à plasma, la couche de $SnO_2$ :F jouant un rôle de conducteur électrique et étant placée du côté interne de ladite face par rapport à l'écran. Dans ce cas, on utilise avantageusement comme substrat un verre à haut point de contrainte (« strain point » en anglais) comme le CS77 (strain point à 585°C) commercialisé par Saint-Gobain Glass France. Dans ce cas, après dépôt CVD on procède à un refroidissement lent, notamment entre 50 et 150°C par min.

On peut également réaliser selon l'invention un dépôt CVD notamment de $SnO_2$ :F sur un verre plus classique du type silicosodocalcique comme celui de marque PLANILUX commercialisé par la société Saint-Gobain Glass France, pour les applications suivantes :

- a) vitre chauffante : une couche conductrice selon l'invention (notamment en $SnO_2$ :F) chauffe par effet Joule ;

- b) vitre à basse-émissivité : on dépose une couche à caractère basémissif (par exemple en $SnO_2$ :F) sur une face ou une telle couche sur chaque face. Une vitre en verre ainsi recouverte peut servir de porte de four, la ou les couche(s) abaissant la température de la porte pendant le chauffage du four, ce qui est particulièrement demandé pour les four à nettoyage par pyrolyse compte tenu des fortes températures utilisées pendant la pyrolyse. En pratique, pour réaliser une couche de chaque côté de la vitre, on peut en réaliser une directement après l'installation de formage en verre plat (notamment du type verre flotté), puis découper le ruban continu en panneaux, puis réaliser une couche selon l'invention sur l'autre face, en reprise ;

- c) vitre pour lampe plane : une couche conductrice selon l'invention (notamment en $SnO_2$ :F) sert d'électrode ;

- d) vitre pour cellule photo-voltaïque : une couche conductrice selon l'invention (notamment en $SnO_2$ : F) sert d'électrode .

Pour les applications a) à d) qui viennent d'être données on souhaite généralement que le substrat soit trempé ou durci. On procède donc ici à un refroidissement rapide du type trempe ou durcissement après le dépôt CVD.

L'invention n'est pas limitée à la réalisation de couches $SnO_2$ :F et l'on peut réaliser selon le même principe, notamment sur des substrats en verre, des couches homogènes

- en oxyde d'Indium et d'étain communément appelées ITO, notamment pour des applications nécessitant une couche conductrice,
- en oxycarbure de silicium communément désignées SiOC,
- en oxyde de chrome,
- en oxyde de titane $TiO_2$, notamment pour réaliser une couche autonettoyante.

L'invention permet également la réalisation de couche conductrice, notamment en $SnO_2$ :F , pour la réalisation d'écran LCD (liquid cristal display) ou TFT (thin film transistor).

L'invention permet la réalisation de panneaux comprenant notamment une feuille de verre et au moins une couche CVD (notamment en $SnO_2$ :F), ladite feuille faisant au moins 10 cm voire au moins 20 cm, dans toutes les directions parallèles à ses faces principales, ladite feuille étant revêtue d'au moins une couche CVD sur au moins l'une de ses faces principales et sur l'intégralité de sa tranche. En effet, contrairement aux procédé de dépôt en continu sur un ruban float dans lequel des panneaux sont découpés après le revêtement CVD ce qui aboutit nécessairement à des tranches non revêtues, le procédé selon l'invention mène à des panneaux à la tranche revêtue sur toute sa circonférence.

Par ailleurs, le procédé selon l'invention est particulièrement utile pour déposer au moins l'une des couches d'un substrat (notamment en verre) devant être revêtu sur ses deux faces principales. En effet, dans le cas d'un substrat en verre dont les deux surfaces principales devraient être revêtues, on peut procéder de la façon suivante :

- réalisation d'un premier dépôt sur une première face principale directement en continu sur le ruban de verre, soit à l'intérieur d'une installation de formage en verre plat par flottage sur un bain métallique (bain float) , soit juste après la sortie d'une telle installation, puis
- passage du ruban dans l'étenderie, puis
- découpe longitudinale et transversale du ruban pour obtenir des panneaux, puis
- dépôt selon l'invention sur la seconde face principale,
- puis, éventuellement, réalisation d'une trempe thermique.

De tels panneaux en verre revêtus sur leurs deux faces principales (notamment en $SnO_2$ dopé F) trouvent notamment une utilité en tant que panneau présentant une bonne transmission lumineuse dans le visible tout en réfléchissant fortement les infra-rouges. Ce type de panneau est recherché pour réaliser les portes de four à travers lesquelles on souhaite pouvoir regarder sans risquer de graves brûlures en cas de contact, comme par exemple les portes enseignées par le FR 2726633 ou le GB 1524650.

La figure 1 représente un panneau 1 posé sur un support 2, une buse 3 délivrant des gaz CVD (flèches) au-dessus de l'une des faces principales dudit panneau. Le panneau défile dans le sens de vision de la figure. Le support dépasse horizontalement de tous les côtés du panneau (c'est-à-dire côtés parallèles au sens de défilement et côtés perpendiculaires au sens de défilement) de la distance d1, laquelle est d'au moins 4 cm. La buse dépasse horizontalement de chaque côté du panneau de la distance d2. Les flèches de chaque côté du panneau montrent que le support force les gaz à proximité du panneau à aller vers l'extérieur à l'horizontal en direction transversale.

La figure 2 représente un mode de réalisation non couvert par la présente demande à titre comparatif. Ici, un panneau 1 défile sur un lit de rouleaux 4. et sous une buse (non représentée) délivrant des gaz CVD réprésentés par des flèches. On voit que les gaz peuvent prendre une direction verticale à proximité immédiate du panneau pour passer entre les rouleaux.

La figure 3 représente un procédé selon l'invention en continu, une multiplicité de panneaux 1 étant entraînés par un tapis 5 sur lequel ils sont posés et défilant dans le sens de la flèche S à travers une chambre CVD 6. Une buse 7 en forme de fente (le sens de la fente est le sens transversal et donc celui de la vision de la figure) délivre les gaz CVD, ces dernier étant ensuite aspirés par les ouvertures 8 (aspiration principale) et 9 (aspiration secondaire moins forte que l'aspiration principale). Le tapis est entraîné par des rouleaux 10. Il forme une boucle de circulation à travers la chambre, c'est-à-dire entrant dans la chambre, la traversant, en sortant puis revenant à son entrée. Un chauffage 11 chauffe le tapis pour réduire les quantités de composés chimiques provenant de la chambre et tendant à encrasser le tapis. Un système 12 de contrôle antidévirage rattrape les déplacements transversaux du tapis. La tension du tapis est réglée en 13.

La figure 4 représente un procédé selon l'invention en continu, une multiplicité de panneaux 1 reposant chacun sur un plateau 14, lesquels sont entraînés dans le sens de la flèche S à travers une chambre CVD (non représentée sur cette figure). Les plateaux sont eux-même entrainés par des rouleaux convoyeurs 15. Les plateaux dépassent des bords transversaux des panneaux de la distance d3 et dépassent des bords longitudinaux des panneaux de la distance d1, d1 et d3 étant tous deux au moins égaux à 4 cm.

**Revendications**

1. Procédé de traitement de toute une surface principale d'au moins un panneau (1) posé sur au moins un support (2), par projection d'une matière gazeuse, liquide ou solide pulvérulente, ledit support débordant du panneau et jouant un rôle barrière vis-à-vis de la matière projetée, **caractérisé en ce que** le support entraîne le panneau pour le faire défiler sous au moins une buse (3) en forme de fente transversale perpendiculaire au sens de défilement du panneau, ladite buse délivrant la matière projetée.

2. Procédé selon la revendication précédente, **caractérisé en ce que** la matière projetée est forcée à prendre une direction parallèle audit panneau (1) à proximité et à l'extérieur de toutes les bordures dudit panneau.

3. Procédé selon l'une des revendications précédentes, **caractérisé en ce que** la matière est projetée sensiblement en direction orthogonale par rapport au panneau, le support forçant la matière projetée à prendre une direction parallèle audit panneau à proximité de ses bordures.

4. Procédé selon l'une des revendications précédentes, **caractérisé en ce que** le traitement est un procédé de déposition de couche mince par pyrolyse dans une chambre de déposition (6).

5. Procédé selon l'une des revendications précédentes, **caractérisé en ce que** le traitement est un procédé de déposition d'une couche mince par réaction chimique à partir d'une phase gazeuse.

6. Procédé selon l'une des revendications précédentes, **caractérisé en ce que** le support dépasse horizontalement de tous les côtés du panneau (1).

7. Procédé selon l'une des revendications précédentes, **caractérisé en ce que** la buse est plus grande dans le sens transversal que la largeur dudit panneau.

8. Procédé selon l'une des revendications précédentes, **caractérisé en ce que** la buse (3) dépasse horizontalement d'au moins 4 cm de chaque côté du panneau.

9. Procédé selon l'une des revendications précédentes **caractérisé en ce que** le support dépasse horizontalement de tous les côtés du panneau d'au moins 4 cm.

10. Procédé selon l'une des revendications précédentes **caractérisé en ce que** le support est un tapis défilant (5).

11. Procédé selon l'une des revendications précédentes **caractérisé en ce que** le support présente un coefficient de perte de charge singulière au gaz supérieure à 60.

12. Procédé selon la revendication précédente **caractérisé en ce que** le procédé est continu, une multiplicité de panneaux étant posés sur le tapis (5), ledit tapis formant une boucle de circulation traversant la chambre de déposition.

13. Procédé selon la revendication précédente **caractérisé en ce que** en dehors de la chambre de déposition et avant son retour à l'entrée de la chambre, le tapis est chauffé pour réduire les quantités de composés émis dans la chambre de déposition (6) et l'imprégnant.

14. Procédé selon l'une des revendications précédentes **caractérisé en ce que** le panneau est plan.

15. Procédé selon l'une des revendications précédentes **caractérisé en ce que** le panneau comprend une feuille de verre.

16. Panneau comprenant une feuille de verre d'au moins 10 cm dans toutes les directions parallèles à ses faces principales, ladite feuille étant revêtue d'au moins une couche mince en $SnO_2$ :F sur au moins l'une de ses faces principales et sur l'intégralité de sa tranche.

**17.** Panneau selon la revendication précédente **caractérisé en ce que** la feuille de verre fait au moins 20 cm dans toutes les directions parallèles à ses faces principales.

**18.** Utilisation du panneau de l'une des revendications de panneau précédentes à la réalisation d'écrans à plasma, LCD, TFT, porte de four, lampe plane, cellule photo-voltaïque.

**Claims**

**1.** Process for treating the entire main surface of at least one panel (1) placed on at least one support (2), by spraying a gaseous, liquid or pulverulent solid material, said support extending beyond the panel and acting as a barrier with respect to the sprayed material, **characterized in that** the support entrains the panel in order to make it run beneath at least one nozzle (3) in the form of a transverse slit perpendicular to the run direction of the panel, said nozzle delivering the sprayed material.

**2.** Process according to the preceding claim, **characterized in that** the sprayed material is forced to take a direction parallel to said panel (1) in the vicinity and to the outside of all the borders of said panel.

**3.** Process according to one of the preceding claims, **characterized in that** the material is sprayed substantially in a direction orthogonal to the panel, the support forcing the sprayed material to take a direction parallel to said panel in the vicinity of its borders.

**4.** Process according to one of the preceding claims, **characterized in that** the treatment is a thin-film pyrolitic deposition process in a deposition chamber (6).

**5.** Process according to one of the preceding claims, **characterized in that** the treatment is a process for depositing a thin film by chemical reaction from a vapor phase.

**6.** Process according to one of the preceding claims, **characterized in that** the support extends horizontally beyond all the sides of the panel (1).

**7.** Process according to one of the preceding claims, **characterized in that** the nozzle is wider in the transverse direction than the width of said panel.

**8.** Process according to one of the preceding claims, **characterized in that** the nozzle (3) extends horizontally beyond each side of the panel by at least 4 cm.

**9.** Process according to one of the preceding claims, **characterized in that** the support extends horizontally beyond all the sides of the panel by at least 4 cm.

**10.** Process according to one of the preceding claims, **characterized in that** the support is a running belt (5).

**11.** Process according to one of the preceding claims, **characterized in that** the support presents the gas with a singular pressure drop coefficient of greater than 60.

**12.** Process according to the preceding claim, **characterized in that** the process is continuous, a multiplicity of panels being placed on the belt (5), said belt forming a loop running through the deposition chamber.

**13.** Process according to the preceding claim, **characterized in that**, outside the deposition chamber and before its return into the chamber, the belt is heated in order to reduce the amounts of compounds emitted in the deposition chamber (6) and the impregnant.

**14.** Process according to one of the preceding claims, **characterized in that** the panel is flat.

**15.** Process according to one of the preceding claims, **characterized in that** the panel comprises a glass sheet.

**16.** Panel comprising a glass sheet at least 10 cm in all directions parallel to its main faces, said sheet being coated with at least one thin film made of $SnO_2$:F on at least one of its main faces and on all of its edges.

**17.** Panel according to the preceding claim, **characterized in that** the glass sheet measures at least 20 cm in all directions parallel to its main faces.

**18.** Use of the panel of one of the preceding panel claims in the production of plasma, LCD or TFT screens, oven doors, flat lamps, photovoltaic cells.

**Patentansprüche**

**1.** Verfahren zur Behandlung von einer gesamten Hauptoberfläche zumindest einer Platte (1), welche auf zumindest einem Träger (2) liegt, durch Projektion zumindest eines gasförmigen, flüssigen oder pulverförmigen festen Stoffes, wobei der Träger die Platte überragt und eine Barriererolle bezüglich des projizierten Stoffs übernimmt, **dadurch gekennzeichnet, dass** der Träger die Platte mit sich zieht, um sie unter zumindest einer Düse (3) in Form einer transversalen bezüglich der Bewegungsrichtung der Platte senkrechten Spalte passieren zu lassen, wobei die Düse den projizierten Stoff bereitstellt.

2. Verfahren gemäß dem vorhergehenden Anspruch, **dadurch gekennzeichnet, dass** der projizierte Stoff dazu gezwungen wird, in der Nähe und außerhalb aller Ränder der Platte, eine bezüglich der Platte (1) parallele Richtung zu nehmen.

3. Verfahren gemäß einem der vorhergehenden Ansprüche, **dadurch gekennzeichnet, dass** der Stoff spürbar in eine bezüglich der Platte orthogonale Richtung projiziert wird, wobei der Träger den projizierten Stoff dazu zwingt, in der Nähe ihrer Ränder eine bezüglich der Platte parallele Richtung zu nehmen.

4. Verfahren gemäß einem der vorhergehenden Ansprüche, **dadurch gekennzeichnet, dass** die Behandlung ein Verfahren zur Abscheidung einer dünnen Schicht durch Prolyse in einer Beschichtungskammer (6) ist.

5. Verfahren gemäß einem der vorhergehenden Ansprüche, **dadurch gekennzeichnet, dass** die Behandlung ein Verfahren zur Abscheidung einer dünnen Schicht durch chemische Reaktion ausgehend von einer Gasphase ist.

6. Verfahren gemäß einem der vorhergehenden Ansprüche, **dadurch gekennzeichnet, dass** der Träger horizontal alle Seiten der Platte (1) überragt.

7. Verfahren gemäß einem der vorhergehenden Ansprüche, **dadurch gekennzeichnet, dass** die Düse in transversaler Richtung größer als die Breite der Platte ist.

8. Verfahren gemäß einem der vorhergehenden Ansprüche, **dadurch gekennzeichnet, dass** die Düse (3) jede Seite der Platte horizontal um mindestens 4 cm überragt.

9. Verfahren gemäß einem der vorhergehenden Ansprüche, **dadurch gekennzeichnet, dass** der Träger alle Seiten der Platte horizontal um mindestens 4 cm überragt.

10. Verfahren gemäß einem der vorhergehenden Ansprüche, **dadurch gekennzeichnet, dass** der Träger ein Förderband (5) ist.

11. Verfahren gemäß einem der vorhergehenden Ansprüche, **dadurch gekennzeichnet, dass** der Träger einen abseitigen Gasdruckverlustkoeffizient von mehr als 60 aufweist.

12. Verfahren gemäß dem vorhergehenden Anspruch, **dadurch gekennzeichnet, dass** das Verfahren fortlaufend ist, wobei eine Vielzahl von Platten auf dem Band (5) angeordnet sind, wobei das Band einen Zirkulationskreis bildet, der die Beschichtungskammer durchläuft.

13. Verfahren gemäß dem vorhergehenden Anspruch, **dadurch gekennzeichnet, dass** das Band außerhalb der Beschichtungskammer und vor seiner Rückkehr zum Eingang der Kammer erwärmt wird, um die Mengen von Verbindungen, die in der Beschichtungskammer (6) abgegeben werden und es imprägnieren, zu reduzieren.

14. Verfahren gemäß einem der vorhergehenden Ansprüche, **dadurch gekennzeichnet, dass** die Platte eben ist.

15. Verfahren gemäß einem der vorhergehenden Ansprüche, **dadurch gekennzeichnet, dass** die Platte eine Glasscheibe umfasst.

16. Platte umfassend eine Glasscheibe von zumindest 10 cm in alle Richtungen, die bezüglich seiner Hauptseiten parallel sind, wobei die Scheibe von zumindest einer dünnen Schicht aus $SnO_2$ :F auf zumindest einer ihrer Hauptflächen und über die Gesamtheit ihres Aufschnitts bedeckt ist.

17. Platte gemäß dem vorhergehenden Anspruch, **dadurch gekennzeichnet, dass** die Glasscheibe zumindest 20 cm in sämtlichen zu seinen Hauptseiten parallelen Richtungen macht.

18. Verwendung der Platte gemäß einem der vorhergehenden Ansprüche auf Platten zur Herstellung von Plasmabildschirmen, LCD, TFT, Ofentür, Flächenstrahler, fotovoltaische Zelle.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4338078 A
- EP 419053 A
- FR 2726633
- GB 1524650 A